# EUROPEAN PATENT SPECIFICATION

(11) **EP 3 339 754 B1**
(45) Date of publication and mention of the grant of the patent: **09.09.2020**
(21) Application number: 16306796.0
(22) Date of filing: 22.12.2016
(51) Int. Cl.: F24D 19/10, G05D 23/19

(54) **SYSTEM AND METHOD FOR BALANCING TEMPERATURE WITHIN A BUILDING**
SYSTEM UND VERFAHREN ZUM AUSGLEICHEN DER TEMPERATUR INNERHALB EINES GEBÄUDES
SYSTÈME ET PROCÉDÉ DE RÉGULATION DE LA TEMPÉRATURE DANS UN BÂTIMENT

(43) Date of publication of application: 27.06.2018
(73) Proprietor: Netatmo, 92100 Boulogne Billancourt (FR)
(72) Inventor: GABRIEL, Chadi, 92160 Antony (FR); POTTER, Frédéric, 92200 Neuilly-sur-Seine (FR); PAOLI, Romain, 92190 Meudon (FR)
(74) Representative: Honnet, Sylvie Florence Liliane

(56) References cited:
- DE-A1-102010 033 428
- DE-A1-102015 205 638

## Description

### FIELD

The invention relates to the field of smart thermal management of household consumer devices and, in particular, the thermal control within a room or a house or a building. The invention concerns a system and method for balancing the flow of heating fluid entering heat emitters within a house. Although many of the features of this invention will be described in relation to a residential home environment, it is understood that they are generally applicable to office and industrial building applications or the like.

### BACKGROUND

Over the last decades, many products have been introduced in order to control heat emitters within a room or a house. A traditional solution, still widespread, is to perform a room per room heat management inside a building. Each heat emitter is equipped with a valve that regulates the heat flux inside the heat emitter. The valve is either a mechanical valve or a thermostatic valve.

In the case of a mechanical valve, the user adjusts its position depending on the ambient temperature he wishes inside the room. If the room comprises many heat emitters, the user has to adjust the position of each valve. This way to operate is tedious.

A thermostatic valve, also called a thermostatic radiator valve, is a self-regulating valve fitted to a hot water heating system radiator, to control the temperature of a room by changing the flow of hot water to the radiator. Such a valve gradually closes as the temperature of the surrounding area increases, limiting the amount of hot water entering the radiator.

A thermostatic valve allows a better thermal management within a room without a need of manually adapting the position of the valve. It is also possible to program various time slots each corresponding to a temperature setpoint in the room. For example, the temperature setpoint of each valve may be set at 20°C from 7am to 11pm and at 18°C during the night, so as to save energy. To this end, a thermostat can be used to control operation of a central heating system, for example a boiler or more generally a heat generator, and regulate the temperature of one or more rooms by setting a temperature setpoint and monitoring the temperature within the home. If the room temperature falls below the temperature setpoint, the thermostat sends an appropriate signal to operate a heating schedule as deemed necessary. Document DE 10 2010 033 428 discloses such a heating system comprising a thermostat having a control unit 16 and a room temperature sensor. The control unit calculates the temperature difference between the measured room temperature and the temperature setpoint and generates a control signal for the TRV. A TRV aperture is transmitted to the communication link further to the temperature difference.

Today, it is well known to use, in combination with thermostatic valves, a variety of communication mediums to enable the thermal control within a room or a house, for example power lines, cabled or wireless networks. The user may perform this thermal control with a connection via the Internet allowing a further degree of remote control. Such a connection can be realized thanks to a gateway which can be driven by the user via a web application from a PC connected to the internet or directly via a smartphone application.

Nevertheless, depending on the configuration of the house and the positioning of heat emitters in relation to one another, as well as the positioning of the thermostat itself, this may result in a suboptimal thermal regulation. Indeed if the thermostat is in the living-room and the temperature setpoint is reached in this room, the boiler may receive from the thermostat an order to stop heating. But the temperature setpoint in the bedroom may not be reached. Since the thermostat sent the order to the boiler to shut down, the circulating water is not hot enough to enable the heat emitter in the bedroom to heat this room up to the temperature setpoint of the bedroom. Despite the predefined temperature setpoint of the bedroom, this temperature may not be reached.

There is a need for a better thermal control within a house to ensure that each temperature setpoint in each room is reached by taking room configuration and temperature setpoints into account.

### SUMMARY OF THE INVENTION

The invention aims to provide a system and method for balancing the flow of heating fluid entering heat emitters within a house, thus enabling a better thermal management within a house.

To this end, the subject of the invention is a thermostatic radiator valve (TRV) comprising an aperture to adjust a flow of heat transfer fluid from a thermal energy generator entering a heat exchanger, the TRV comprising a communication link to a processing unit connected to a thermostat 60 controlling the thermal energy generator; an input interface configured to one or more of allow a user to enter or acquire a first TRV-defined temperature setpoint; wherein the TRV is further configured to receive from the processing unit a first aperture setting, the first aperture setting being defined as a function of a temperature configuration model available at the processing unit.

According to the invention, the first aperture setting may be further defined as a function of the first TRV-defined temperature, and/or at least a second TRV-defined temperature setpoint of at least a second TRV.

The TRV of the invention may be configured to store a time schedule of TRV-defined temperature setpoints.

The TRV of the invention may further comprise a temperature sensor configured to detect a temperature drop and the TRV is configured to stop the flow of heat transfer fluid from the thermal energy generator entering the heat exchanger to which it is connected. In case of a rapid temperature drop, indicating aeration of a room, the TRV according to the invention communicates to the other TRVs in the same room the order to stop flow because the window is opened. All TRVs in the same room stop heating when a window opening is detected, thus leading to energy savings.

The invention also relates to a processing unit connected to a thermostat controlling a thermal energy generator, comprising a communication link to a thermostatic radiator valve (TRV) comprising an aperture to adjust a flow of heat transfer fluid from the thermal energy generator entering a heat exchanger in a first room based on a first TRV-defined temperature setpoint, a temperature configuration model, the processing unit being configured to send to the TRV a first aperture setting being defined as a function of the temperature configuration model.

The processing unit of the invention may further comprise a second communication link to the second TRV comprising an aperture to adjust a flow of heat transfer fluid from the thermal energy generator entering a second heat exchanger in a second room based on the second TRV-defined temperature setpoint, the processing unit being configured to send to the second TRV a second aperture setting defined as a function of the first TRV-defined temperature setpoint, the second TRV-defined temperature setpoint and the temperature configuration model, wherein the first aperture setting and the second aperture setting define an equilibrium position corresponding to the apertures of the TRVs enabling to reach the first and second TRV-defined temperature setpoints.

The invention also relates to a server comprising a communication link to one or more buildings; a memory having stored thereon a database of values of temporal sequences of environmental parameters captured from a plurality of TRVs, thermostats and sensors located in the one or more buildings; a processing unit configured to calculate parameters of a temperature configuration model; wherein the parameters are determined by a learning module receiving as input at least some of the values of temporal sequences of environmental parameters stored in the database and are distributed to at least part of the one or more buildings through the communication link.

The invention also relates to a method for temperature balancing using a thermostatic radiator valve (TRV) in a first room comprising an aperture to adjust a flow of heat transfer fluid from a thermal energy generator entering a heat exchanger in the first room based on a first TRV-defined temperature setpoint, the TRV comprising a communication link to a processing unit connected to a thermostat controlling the thermal energy generator; an input interface configured to one or more of allow a user to enter or acquire a first defined temperature setpoint; the method comprising the step of receiving from the processing unit a first aperture setting for the TRV, the first aperture setting being defined as a function of the temperature configuration model.

The TRVs according to the invention may be connected to a server, thus enabling the user to control the TRVs remotely and pass data to a remote server, for instance to be used in building a temperature model.

The method according to the invention enables to adapt the temperature setpoint of the TRVs depending on the necessity to heat up/cool down or not the various rooms within the house, thus leading to an appropriate temperature balancing between the various rooms.

### BRIEF DESCRIPTION OF THE DRAWINGS

The accompanying drawings illustrate various non-limiting, exemplary, innovative aspects in accordance with the present description:
- Figure 1 schematically represents a thermostatic radiator valve according to the invention;
- Figure 2 schematically represents an embodiment of the thermostatic radiator valve for temperature balancing configured to adjust the flow of heating fluid based on defined temperature setpoints of one or more other TRVs according to the invention;
- Figure 3 schematically represents a variation of the first embodiment of the thermostatic radiator valve for temperature balancing configured to adjust the flow of heating fluid based on defined temperature setpoints of one or more other TRVs according to the invention;
- Figure 4 schematically represents another embodiment of the thermostatic radiator valve for temperature balancing configured to adjust the flow of heating fluid based on one or more of control commands received from a thermostat according to the invention;
- Figure 5 schematically represents another embodiment of the thermostatic radiator valve for temperature balancing configured to store a time schedule of temperature setpoints according to the invention;
- Figure 6 schematically represents another embodiment of the thermostatic radiator valve for temperature balancing configured to detect a temperature drop and stop the flow of heating fluid from the heat generator entering the heat emitter according to the invention;
- Figure 7 represents a block diagram with possible combinations of steps of a method for temperature balancing according to the invention,
- Figure 8 represents a block diagram of the steps to define the aperture setting according to the invention.

For the sake of clarity, the same elements have the same references in the various figures.

The invention is described with self-regulating valves fitted to a hot water heating system radiator and a boiler but it may be applied by analogy to any heating system comprising a central generator (from thermal, geothermal energy) and a plurality of radiators with corresponding regulating devices.

Moreover the invention is described with a thermostatic radiator valve 21 in the field of heating but relates more generally to a thermostatic radiator valve TRV configured to adjust a flow of heat transfer fluid from a thermal energy generator entering a heat exchanger based on a temperature setpoint, the thermal energy generator and the heat exchanger configured to heat or cool a room with a room temperature, the TRV comprising a communication link to a processing unit connected to a thermostat 60 controlling the thermal energy generator; an input interface configured to one or more of allow a user to enter or acquire a TRV-defined temperature setpoint; wherein the TRV is further configured to receive from the processing unit a first aperture setting, the first aperture setting being defined as a function of a temperature configuration model available at the processing unit.

In the following, the invention will be described with the heat transfer fluid being a heating fluid, the heat exchanger being a heat emitter and the thermal energy generator being a heat generator. But the heat transfer fluid can also be a cooling fluid, the heat exchanger a cooling emitter and the thermal energy generator a cooling generator.

### DETAILED DESCRIPTION

As previously mentioned, although many of the features of this invention are described in relation to a residential home environment, it is understood that they are generally applicable to many office and industrial building applications as well.

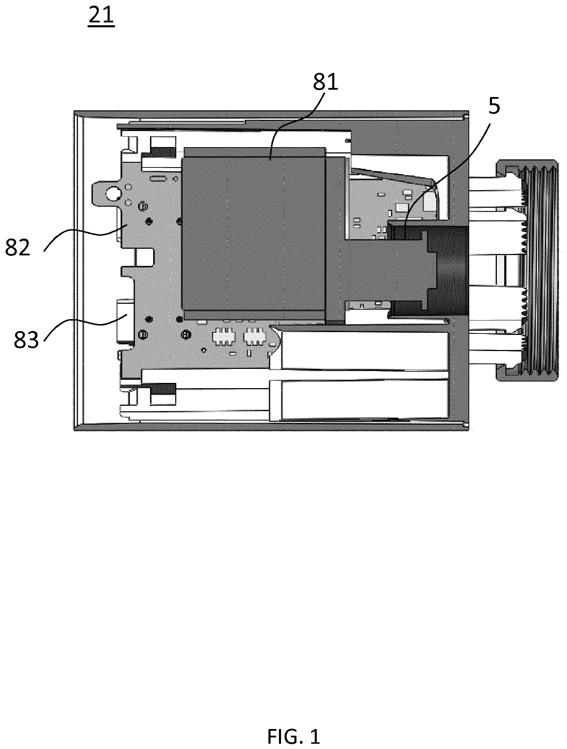

**Figure 1** schematically represents a thermostatic radiator valve (TRV) according to the invention. The TRV 21 comprises a motor 81, an electronic card 82. In a preferred embodiment, the thermostatic radiator valve 21 may comprise a temperature sensor 83. The motor 81 may be replaced by any other system able to reduce the fluid flow in the heat emitter.

The TRV 21 is a self-regulating valve fitted to a heating fluid conduit from a heat generator entering a heat emitter (or radiator) to which the TRV 21 is connected. The TRV 21 may include a memory to store some data such as a temperature setpoint. Depending on the surrounding temperature, for example measured by the TRV 21, and a temperature setpoint of the TRV 21, an electronic board 82 comprising a calculator may activate the motor 81 to mechanically adapt the aperture 5 of the TRV 21. Such a TRV 21 gradually closes as the temperature of the surrounding area increases, limiting the amount of heating fluid entering the heat emitter.

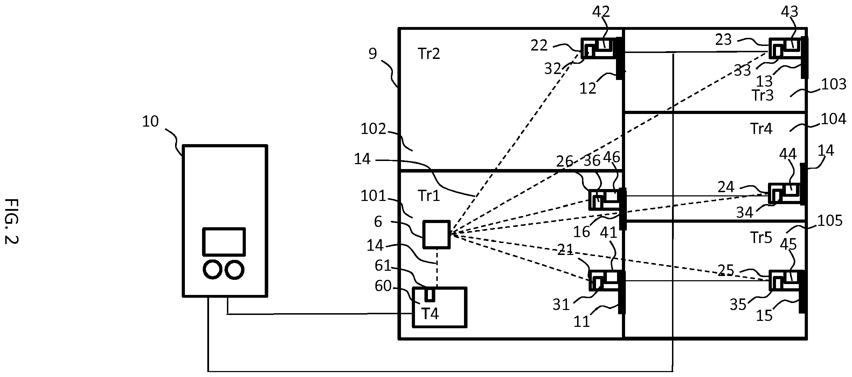

**Figure 2** schematically represents an embodiment of the thermostatic radiator valve for temperature balancing configured to adjust the flow of heating fluid based on defined temperature setpoints of one or more other TRVs defined in a list according to the invention. The TRV 21 is in a first room 101. The TRV 21 comprises the aperture 5 to adjust a flow of heating fluid from a heat generator 10 entering a heat emitter 11 in the first room 101 based on a first TRV-defined temperature setpoint. The TRV 21 comprises a communication link 31 to a processing unit 6 connected to a thermostat 60 controlling the heat generator 10; an input interface configured to one or more of allow a user to enter or acquire the first TRV-defined temperature setpoint. In some embodiments, the processing unit may be located in a same packaging as the TRV, the communication link being for instance a bus. In some other embodiments, the processing unit may be located in a same packaging as the thermostat or nearby or in the same packaging as a relay may be connected to the TRVs through a wired or radio connection 14 (Zigbee, Wi-Fi, Bluetooth™...), or nearby. According to the invention, the TRV 21 is further configured to receive from the processing unit 6 an aperture setting, this aperture setting being defined as a function of the temperature configuration model available at the processing unit 6. This aperture setting may also consider the TRV-defined temperature setpoint for the TRV 21. It may also consider at least a second TRV-defined temperature setpoint for the TRV 22. The second TRV 22 may be in the same room 101 as the TRV 21, it is indeed possible to consider two different temperature setpoints in the same room. The second TRV 22 may be in a second room, for example the room 102, each room having its own temperature setpoint. This is of particular interest since a well-balanced flow of heating fluid throughout the heat emitters of the rooms 101, 102 is ensured, enabling the achievement of each room temperature. The fact that each room temperature setpoint is reached in each room allows optimization of energy consumption. Furthermore, a thermal management of this type is quite intuitive and user-friendly. Indeed, the boiler is not set ON if all the defined temperature setpoints are reached and the user expects no further heating when each room has reached its temperature setpoint. And the boiler is set ON if at least one temperature setpoint is not reached in a room, and in this case, the user also expects that the boiler should be set ON to heat up this room. In some embodiments, the processing unit is directly connected or included in the TRV. In some other embodiments, it is connected or included in the thermostat. In some other embodiments, it is connected of included in a relay unit of the local network.

According to the invention, an "auto balance" of the heating fluid throughout the house is made possible. In a preferred embodiment of the invention, this auto balancing is based on the TRVs installed in the same room as the thermostat. Those TRVs have an aperture that depends on the different temperature configuration models computed for all the TRVs of the house, the thermostat setpoint, the outdoor temperature. The temperature setpoint of the TRVs in the same room as the thermostat is the same as that of the thermostat. In details, a TRV in the same room as the thermostat will have all the time the same setpoint as the thermostat. However, it will not regulate its aperture in order to regulate the temperature in this room (since it is the function of the thermostat). However, it will define based on this setpoint, the different thermal parameters of each TRVs and the outdoor temperature an appropriate aperture 5 that enables the temperature in the thermostat room to be reached and in the same time, keeps enough hot water for the other rooms in order to reach their own setpoint or at least be as close as possible to this setpoint.

The processing unit also comprises a second communication link 32 to the second TRV 22 comprising an aperture 5 to adjust a flow of heating fluid from the heat generator 10 entering a second heat emitter 12 in a second room 102 based on the second TRV-defined temperature setpoint, the processing unit being configured to send to the second TRV 22 a second aperture setting defined as a function of the first TRV-defined temperature setpoint, the second TRV-defined temperature setpoint and the temperature configuration model, wherein the first aperture setting and the second aperture setting define an equilibrium position corresponding to the apertures of the TRVs enabling to reach the first and second TRV-defined temperature setpoints.

As an example for a possible application of the invention with a thermostat placed in the living-room with a first TRV, the model available at the processing unit sends to the thermostat an aperture setting for the first TRV. This aperture setting may, for example, depend on the first TRV-defined temperature setpoint, the TRV-defined temperature setpoints of the TRVs in the other rooms of the house, the outside temperature and eventually other parameters such as percentages of outside and inside humidity. The aperture setting corresponds to a percentage of the aperture of the TRV to adjust the flow of heating fluid from the heat generator entering a heat emitter in the living-room. The thermostat sends this percentage of aperture to the first TRV. Typically the setting of the first TRV is set so as to ensure that the TRV-defined temperature setpoints in the other rooms are reached, whatever they are. That is to say that the percentage of aperture of the first TRV may be reduced to keep enough heating fluid for the other rooms in order to reach their own setpoint or at least be as close as possible to their setpoint.

In other words, the auto balancing thanks to the TRVs of the invention produces a setting in which the TRVs are always open, each with an appropriate aperture determined by auto-equilibrium, thus determining an equilibrium position for the building. The thermal management of the building operates around this equilibrium position. All the rooms of the building reach the corresponding temperature setpoint. Compared to conventional thermal management, the motor 81 of each TRV according to the invention is not so frequently started up. It results in less noise and in a longer lifetime of the battery.

The invention can be applied in the same way with many TRVs in various rooms. As an example, the thermostat is in the living-room 101 where the TRVs 21 and 26 are. The house comprises various other rooms 102, 103, 104, 105 respectively with the TRVs 22, 23, 24, 25. The processing unit 6 defines an aperture setting for the TRV 21 and an aperture setting for the TRV 26, so as to keep enough heating fluid for the heat emitters 12, 13, 14, 15 of the rooms 102, 103, 104, 105 to reach their TRV-defined temperature setpoints. Should the rooms 102, 103, 104, 105 have different TRV-defined temperature setpoints, the processing unit defines an equilibrium position corresponding to the apertures of the TRVs enabling to reach all the TRV-defined temperature setpoints. The flow of heating fluid is split over the various heat emitters in accordance with their TRV-defined temperature setpoints. When a disturbance occurs (for example the outside temperature decreases or a TRV-defined temperature setpoint is increased in at least one room among 102, 103, 104, 105), the processing unit sends to the TRVs 21 and 26 new aperture settings. The equilibrium position is therefore slightly modified to respond to this additional heating request from the one room among 102, 103, 104, 105.

Another example of application of the invention may concern the TRVs 21 and 26 in the room 101 with the thermostat 60, both TRVs having an aperture setting being set. The TRVs 22, 23, 24, 25, which are respectively in the rooms 102, 103, 104, 105, regulate the temperature of their room to reach their own TRV-defined temperature setpoints.

The temperature configuration model available at the processing unit 6 may be either implemented in the processing unit 6 without being updated on a regular basis (for example updates can be performed through uploads from an external device like a USB stick) or the temperature configuration model available at the processing unit 6 may be updated online via a relay connected to an internet network.

The previous example was described with two rooms 101, 102 but the auto balancing between the TRVs applies for more than two rooms, for example five rooms 101, 102, 103, 104, 105, as represented in Figure 2. It works with one TRV and its associated heat emitter in one room, but also with more than one TRV and their associated heat emitters, for example TRVs 21 and 26 respectively associated to the heat emitters 11 and 16 in the room 101.

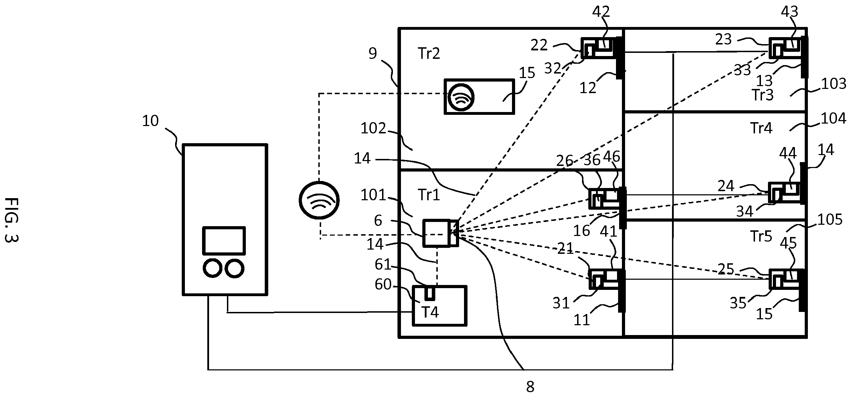

**Figure 3** schematically represents a variation of the first embodiment of the thermostatic radiator valve for temperature balancing configured to adjust the flow of heating fluid based on TRV-defined temperature setpoints of one or more other TRVs according to the invention. In this example, the communication link 31 may include a relay 8 that may be connected to the TRVs through a wired or radio connection 14 (Zigbee, Wi-Fi, Bluetooth...). The relay 8 may be connected to an internet network that enables the reception of external commands.

The invention may be described within a house 9 comprising a plurality of rooms 101, 102, 103, 104, 105, each room having a room temperature setpoint Tr1, Tr2, Tr3, Tr4, Tr5. There may be a relay 8 connected to the thermostat 60 configured to control the heat generator 10. The thermostat 60 is connected to the relay through a dedicated connection 14 and may comprise a memory capable of storing the plurality of room temperature setpoints Tr1, Tr2, Tr3, Tr4, Tr5 and configured to control the heat generator 10 for sending a flow of hot medium to heat up each room 101, 102, 103, 104, 105 according to its room temperature setpoint Tr1, Tr2, Tr3, Tr4, Tr5. A plurality of heat emitters 11, 12, 13, 14, 15, 16 are located in the plurality of rooms, capable of receiving the flow of hot medium from the heat generator 10. There are a plurality of TRVs 21, 22, 23, 24, 25, 26, one of the plurality of valves being connected to one of the plurality of heat emitters 11, 12, 13, 14, 15, 16. Each of the plurality of TRVs may comprise a memory 41, 42, 43, 44, 45, 46 to store at least one first temperature setpoint to be imposed to the heat emitter to which it is connected, and a communication link 31, 32, 33, 34, 35, 36 to receive and send data from/to the thermostat 60 (or the relay 8 if existing) through the dedicated wireless network 14. The thermostat communicates to each of the plurality of TRVs 21, 26 its first aperture setting corresponding to an opening of the said TRV to control the flow of hot medium coming from the heat generator 10 circulating through the heat emitter to which the said valve is connected in accordance with the room temperature setpoint Tr1, Tr2, Tr3, Tr4, Tr5, so as to reach each room temperature setpoint within the house 9.

In the following, the invention will be described with embodiments comprising a relay 8. Nevertheless, such a relay 8 is not compulsory to apply the invention to a plurality of TRVs. In embodiments without relay, the TRVs and the thermostat should be interconnected.

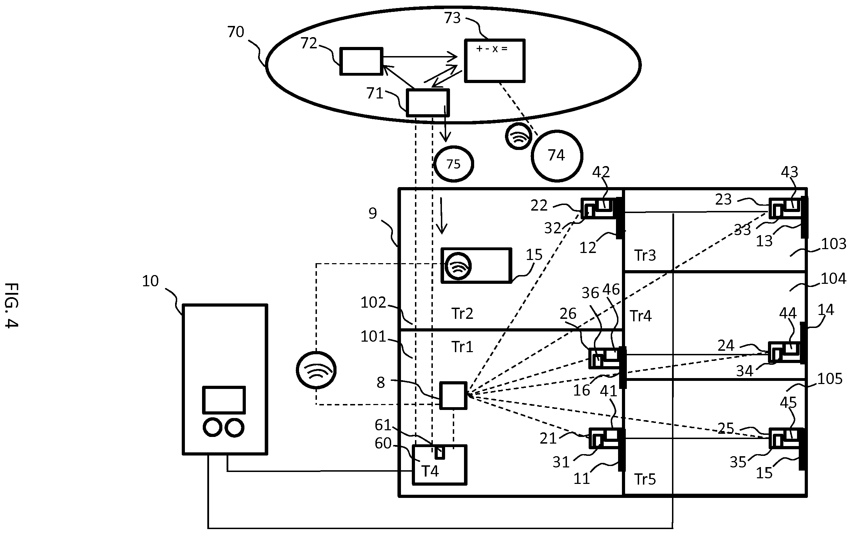

**Figure 4** schematically represents another embodiment of the thermostatic radiator valve for temperature balancing configured to adjust the flow of heating fluid based on one or more control commands received from the relay according to the invention. In this embodiment, the TRV is configured to connect to a server 70 delivering thermostat and/or TRV control commands calculated from a model and the TRV is configured to further adjust the aperture setting based on one or more of control commands received from the thermostat 60 that are calculated based on a combination of the thermostat and/or TRV control commands calculated from the model.

An implementation of the server may be a server 70 comprising a communication link to one or more buildings, and a memory or an access to a memory having stored there on a database of values of temporal sequences of environmental parameters captured from a plurality of TRVs, thermostats and sensors located in the one or more buildings. The server further comprises a processing unit configured to calculate parameters of a temperature configuration model. The parameters are determined by a learning module receiving as input at least some of the values of temporal sequences of environmental parameters stored in the database and are distributed to at least part of one or more buildings through the communication link. Note that the expression "server" may designate one or more virtual machines that are executed on a plurality of physical machines located locally and/or anywhere "in the cloud".

The one or more TRVs receive a temperature setpoint from a thermostat 60 connected to the one or more TRVs, directly or via a relay. According to an aspect of the invention, the computer code instructions are based on a model comprising control parameters which may be determined using a learning module receiving as input at least some of the values of temporal sequences of environmental parameters 75 captured from the one or more TRV stored in the database. The TRVs 21, 22, 23, 24, 25, 26 may capture and store information like ambient temperatures and temperature setpoints. The thermostat 60 may send these data to the server 70. The server 70 may comprise a communication link 71 configured to receive and send data from/to the thermostat 60 through the internet network 15, a memory 72 configured to store data, a control algorithm 73 configured to perform calculations. The building 9 is in an environment with actual environmental parameters 74 and a thermostat temperature setpoint T4 has been set for this building. The control algorithm 73 is configured to receive through the internet network 15 the actual environmental parameters 74, calculate control parameters 75 based on the environmental parameters 74 and the thermostat temperature setpoint T4, send the control parameters 75 to the processing unit 6 to calculate first aperture settings to impose to the plurality of TRVs 21, 26 so as to reach each room temperature setpoint within the building 9.

In some embodiments of the invention, the temperature configuration model is loaded in the processing unit at the time of configuration and may be updated off-line from time to time by a user, for instance using a USB stick or a disk. In other embodiments, the temperature configuration model is uploaded to the processing unit on-line through an internet connection to a server 70 that updates the temperature configuration model from time to time with environmental data that are received from the TRVs or the thermostat of one or more buildings. In other embodiments, the processing unit 6 may have the same functionalities as the server 70. The memory 72 of the server 70 may be configured to store a history 76 of the actual environmental parameters and the control parameters calculated by the control algorithm in relation with the actual environmental parameters. The control algorithm 73 may use a learning module 77 configured to adapt the calculation of the control parameters by taking into account the history 76.

As an example, the control algorithm 73 may include a thermal model taking into account the heat capacity C of the room and the heat transfer coefficient K between the inside and the outside of the room for a plurality of outdoor temperatures. The parameters C and K of the model may be determined either based on the physical characteristics of the room or based on a history 76 of temperatures (setpoints and actual) that are captured over time and stored at the server. Other elements could be added to the model, provided that the model allows controlling an indoor temperature of the room, based at least on predictions of a setpoint temperature, outdoor temperature, and eventually other parameters like the percentage of aperture of the TRV.

Each different room has for example a different heat capacity, heat transfer coefficients of the walls, etc... Thus, the parameters of a model for a room cannot be used directly for another room. There is thus the need to tailor the values of the parameters of a model for an a priori unknown room, in order to get the best possible temperature control.

All or a subset of the values of parameters can be calculated based on the characteristics of the room, like its size, the size of the windows. For example, a heat transfer coefficient K can be calculated for a wall based on the surface, the material and the thickness of the wall. Similarly, a heat capacity C of the room can be calculated based, for example, on the volume of the room and the textures and materials within it.

In the auto balance principle, the temperature setpoints are defined only by the user. However, the auto balance may modify the opening of the aperture 5 of each TRV in order to reach this temperature setpoint. As an example, if the room where the thermostat is installed the temperature setpoint is 20°C and it is cold outside, instead of opening the TRV to the maximum to reach this temperature setpoint, it opens to a certain percentage, thus leaving enough hot water for the other heat emitters in the other rooms of the house to enable them to reach and regulate their own temperature.

The all or a subset of the values of parameters may be calculated by a learning module during a training phase. This solution presents the advantage of allowing a user to install a device for controlling the temperature of the room, as a temperature sensor of the TRV, and the model that best suits the room is automatically calculated, without a need to perform any measurement of the room.

The parameters of the model can be calculated by the server 70. The server is then configured to receive at least measurements of indoor temperature of the room from the temperature sensors of the TRVs or any temperature sensor inside the room, and values of the outdoor temperature of the room. The server is then configured to calculate parameters of the room model based on received data such as the characteristics of the room, like its size, the size of the windows. As explained before, the heat transfer coefficient K can be calculated for a wall based on the surface, the material and the thickness of the wall. The heat capacity C of the room can be calculated based on the volume of the room and the textures and materials within it. Also, the parameters of the room may be calculated by a learning algorithm that processes chronological series of temperature data. The server is further configured to send the parameters to control the temperature of the room. The TRV of the room then receives relevant values of parameters of the model to control the indoor temperature of the room. This solution has the advantage of letting a server with a lot of computing power perform complex calculations of the parameters of the model.

Therefore, the processing unit calculates the aperture settings based on its temperature configuration model. At this stage, the parameters of the temperature configuration model are not modified. The server 70 is able to calculate new parameters of the model and to update on a regular basis (or with a predetermined frequency) the calculating program of the processing unit. The processing unit may be included in a TRV, in the thermostat or a relay. In some embodiments, the processing unit may have the same functionalities as the server 70.

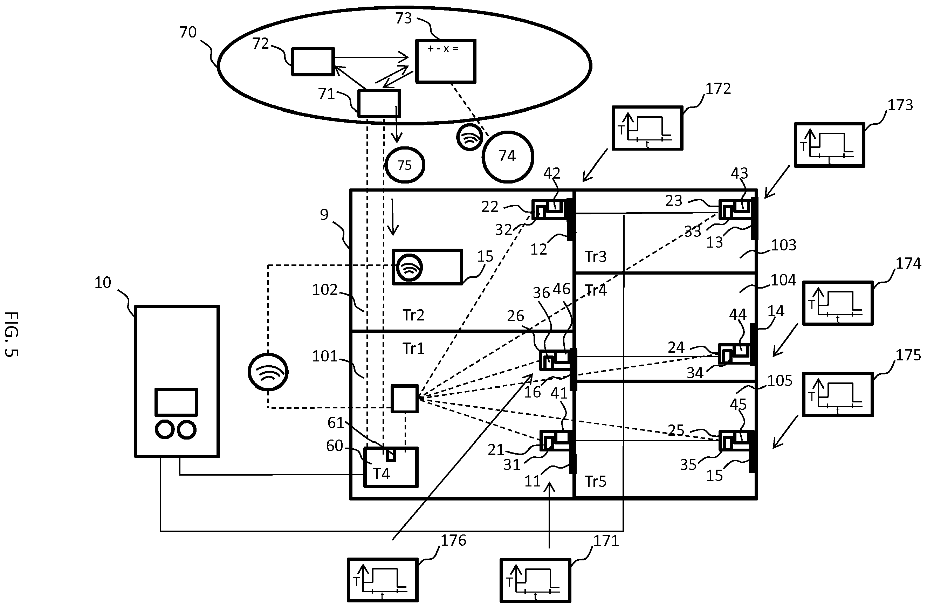

**Figure 5** schematically represents another embodiment of the thermostatic radiator valve for temperature balancing configured to store a time schedule of TRV-defined temperature setpoints according to the invention. The TRV 21 in the room 101 is configured to store a time schedule 171 of TRV-defined temperature setpoints Tr1 of the room 101. The TRV 22 in the room 102 is configured to store a time schedule 172 of TRV-defined temperature setpoints Tr2 of the room 102, and so on. The time schedules 171, 172, 173, 174, 175, 176 may be identical or different. The time schedules 171 and 176 associated to the TRVs 21 and 26 in the same room 101 may be identical since the TRVs 21 and 26 are in the same room 101, to avoid any inconsistencies of the thermal management within the room (even if different temperature setpoints in the same room may be allowed). In this case, the TRV 21 (respectively 26) should be further configured to synchronize the TRV-defined temperature setpoint with the other TRV 26 (respectively 21) in the same room 101, or more generally defined in a synchronization list. Therefore all the TRVs in the same room may have the same TRV-defined temperature setpoint.

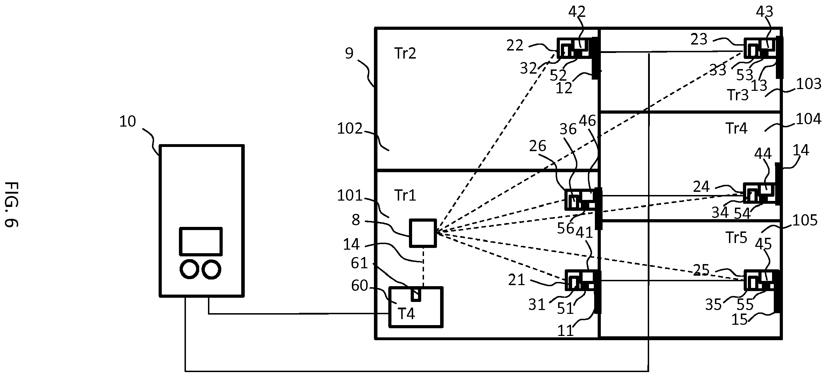

**Figure 6** schematically represents another embodiment of the thermostatic radiator valve for temperature balancing configured to detect a temperature drop and stop the flow of heating fluid from the heat generator entering the heat emitter according to the invention. The TRV 21 (22, 23, 24, 25, 26 respectively) may comprise a temperature sensor 51 (52, 53, 54, 55, 56 respectively) configured to detect a temperature drop and the TRV 21 (22, 23, 24, 25, 26 respectively) is configured to stop the flow of heating fluid from the heat generator 10 entering the heat emitter 11 (12, 13, 14, 15, 16 respectively) to which it is connected. The duration of the stop may be predetermined. This duration can be previously defined by the user or be predetermined and set for example to 20 minutes. In this example, it would mean that 20 minutes after having detected a temperature drop, the TRVs enable the heating fluid to enter the heat emitters again, according to their time schedule. The temperature can be measured either in the thermostatic radiator valve or in the center of the room using an additional sensor or by estimating it. A temperature setpoint may be reached by one thermostatic valve in a room but not by another one in the same room.

This feature avoids the heating up of the room when a window is open. It advantageously enables the user not to care about the thermal regulation within the room when he/she wants to open the window. Indeed, he/she does not have to turn off the TRVs before opening the window and turn them on after closing the window.

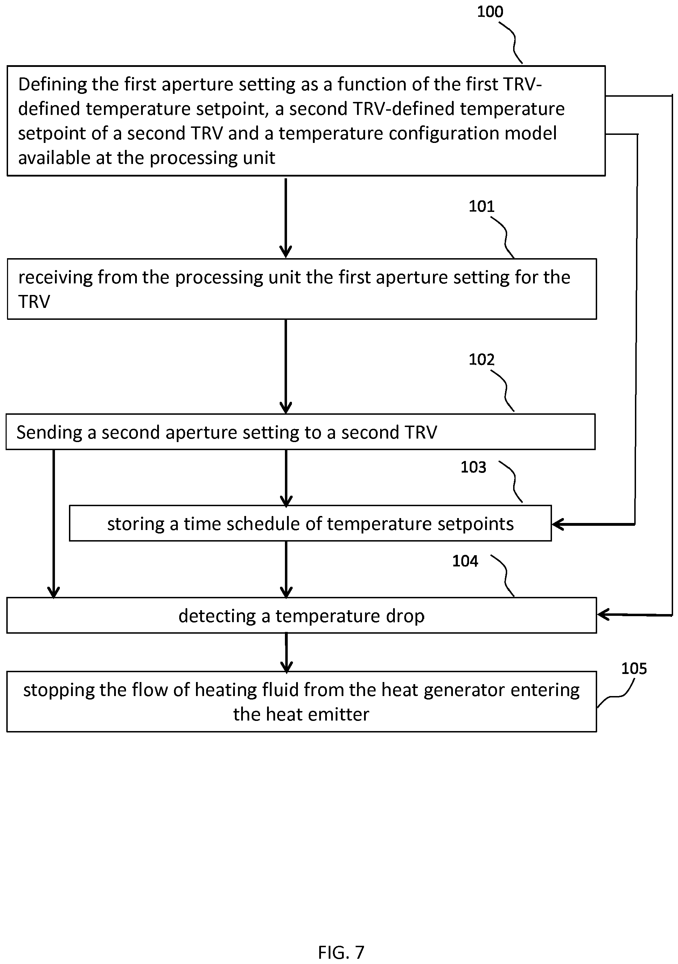

**Figure 7** represents a block diagram with possible combinations of steps of a method for temperature balancing according to the invention. The method according to the invention using a TRV 21 comprises the following steps. The TRV 21 receives from the processing unit a first aperture setting for the TRV 21 (step 101). The first aperture setting is defined as a function of a temperature configuration model available at the processing unit (step 100). The first aperture setting may further be defined as a function of the first TRV-defined temperature setpoint and/or at least a second TRV-defined temperature setpoint of at least a second TRV. The method may comprise a step 102 of sending a second aperture setting to a second TRV.

Moreover, and as explained before, the method may comprise a step of connecting the relay 8 to the server 70 delivering thermostat and/or TRV control commands calculated from the model. Furthermore the method may comprise a step of adjusting the first aperture setting based on one or more control commands received from the relay that are calculated based on a combination of the thermostat and/or TRV control commands calculated from the model.

On top of that, the method may comprise a step 103 of storing a time schedule of temperature setpoints, either on each TRV, or on the relay, or both.

The method may comprise a step 104 of detecting a temperature drop, further leading to a step 105 of stopping the flow of heating fluid from the heat generator 10 entering the heat emitter.

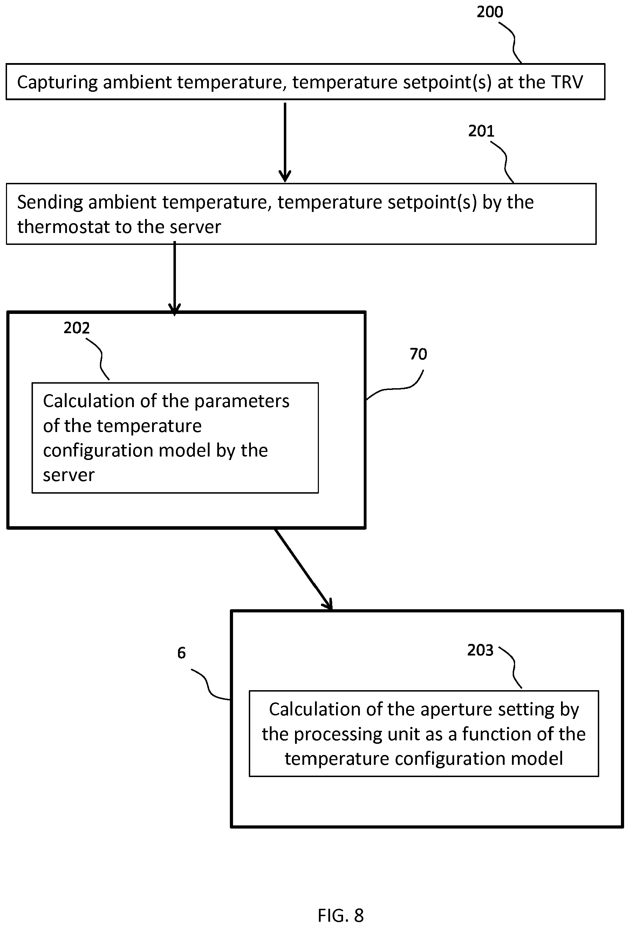

Figure 8 represents a block diagram of the steps to define the aperture setting according to the invention. The method to define the aperture setting may comprise a step 200 of capturing ambient temperature and temperature setpoint(s) at the TRV. The thermostat may send the ambient temperature and the temperature setpoint(s) to the server (step 201). Then the server calculates the parameters of the temperature configuration model (step 202). Once the parameters of the temperature configuration model are determined, the processing unit calculates the aperture setting as a function of the temperature configuration model (step 203). This step 203 corresponds to the step 100 previously discussed. It can be noted that the server 70 can calculate in step 202 the parameters of the temperature configuration model on a predetermined frequency on the one hand. And on the other hand, the processing unit can receive from the server an update of the temperature configuration model on a frequency that may be identical to or different from the predetermined frequency of the step 202. For example, the server 70 can perform step 202 every day or every week and the processing unit 6 receive from the server 70 an update of the temperature configuration model every two weeks.

## Claims

1. A set comprising:
- a first thermostatic radiator valve (TRV, 21) and a second thermostatic radiator valve (TRV, 22), each comprising an aperture (5) to adjust a flow of heat transfer fluid from a thermal energy generator (10) entering a heat exchanger (11), and
- a processing unit connected to a thermostat (60) controlling the thermal energy generator (10),
each TRV (21) comprising:
- means (31) adapted to communicate to the processing unit;
- an input interface configured to one or more of:
o allow a user to enter or
o acquire a TRV-defined temperature setpoint;
**characterized in that** the first TRV (21) is further configured to receive from the processing unit a first aperture setting, the first aperture setting being defined as a function of a temperature configuration model available at the processing unit and the TRV-defined temperature setpoint of the first TRV (21), the second TRV (22) is further configured to receive from the processing unit a second aperture setting, the second aperture setting being defined as a function of a temperature configuration model available at the processing unit and the TRV-defined temperature setpoint of the second TRV (22), the temperature configuration model being defined by updatable model parameters,
and **in that** the first aperture setting and the second aperture setting determine an equilibrium position for each TRV enabling to reach the TRV-defined temperature setpoint for each TRV.

2. The set of claim 1, wherein the first aperture setting is further defined as a function of the first TRV-defined temperature, and/or at least a second TRV-defined temperature setpoint of at least a second TRV or a remote temperature sensor.

3. The set of claim 1 or 2, wherein the TRV is configured to store a time schedule (171, 172, 173, 174, 175, 176) of TRV-defined temperature setpoints (Tr1, Tr2, Tr3, Tr4, Tr5).

4. The set of claims 1 to 3, wherein the TRV further comprises a temperature sensor (51, 52, 53, 54, 55, 56) configured to detect a temperature drop and the TRV is configured to stop the flow of heat transfer fluid from the thermal energy generator (10) entering the heat exchanger (12, 13) to which it is connected.

5. The set of claims 2 to 4, the processing unit further comprising means (32) adapted to communicate to the second TRV (22) comprising an aperture (5) to adjust a flow of heat transfer fluid from the thermal energy generator (10) entering a second heat exchanger (12) in a second room (102) based on the second TRV-defined temperature setpoint,
the processing unit being configured to send to the second TRV (22) a second aperture setting defined as a function of the first TRV-defined temperature setpoint, the second TRV-defined temperature setpoint and the temperature configuration model, wherein the first aperture setting and the second aperture setting define an equilibrium position corresponding to the apertures of the TRVs enabling to reach the first and second TRV-defined temperature setpoints.

6. The set of claims 1 to 5, further comprising:
- a server comprising means to communicate to the TRV and/or the processing unit;
- a memory having stored thereon;
- a database of values of temporal sequences of environmental parameters captured from the plurality of TRVs and the thermostat;
the processing unit being configured to calculate parameters of the temperature configuration model, wherein the parameters are determined by a learning module receiving as input at least some of the values of temporal sequences of environmental parameters stored in the database and are distributed to at least one of the TRV through the means adapted to communicate.

7. The set of claims 1 to 5, the processing unit being configured to calculate parameters of the temperature configuration model, wherein the parameters are determined by a learning module based on a history of actual environmental parameters captured from the plurality of TRVs or the thermostat.

8. The set of claims 4-7, where the TRV is further configured to restart the flow of heat transfer fluid from the thermal energy generator (10) entering the heat exchanger (12, 13) to which it is connected after a duration of time or based on the temperature measurement of at least a second TRV- or a remote temperature sensor

9. A method for temperature balancing using a first thermostatic radiator valve (TRV, 21) and a second thermostatic radiator valve (TRV, 22) in a first room (101), each comprising an aperture (5) to adjust a flow of heat transfer fluid from a thermal energy generator (10) entering a heat exchanger (11) in the first room (101), each TRV (21, 22) comprising:
- means (31) adapted to communicate to a processing unit connected to a thermostat (60) controlling the thermal energy generator (10);
- an input interface configured to one or more of allow a user to enter or acquire a defined temperature setpoint;
**characterized in that** the method comprises the step of receiving from the processing unit:
- a first aperture setting for the first TRV (21), the first aperture setting being defined as a function of the temperature configuration model and the TRV-defined temperature setpoint of the first TRV (21),
- a second aperture setting for the second TRV (22), the second aperture setting being defined as a function of the temperature configuration model and the TRV-defined temperature setpoint of the second TRV (22), the temperature configuration model being defined by updatable model parameters,
the step of determining from the first aperture setting and the second aperture setting an equilibrium position for each TRV enabling to reach the TRV-defined temperature setpoint for each TRV.

10. The method of claim 9, wherein the first aperture setting is further defined as a function of the first TRV-defined temperature, and/or at least a second TRV-defined temperature setpoint of at least a second TRV or a remote temperature sensor.

11. The method of claim 9 or 10, the method further comprising
- configuring the TRV to store a time schedule (171, 172, 173, 174, 175, 176) of TRV-defined temperature setpoints (Tr1, Tr2, Tr3, Tr4, Tr5).

12. The method of claims 9 to 11, wherein the TRV further comprises a temperature sensor (51, 52, 53, 54, 55, 56), the method further comprising
- configuring the TRV to detect a temperature drop, and configuring the TRV to stop the flow of heat transfer fluid from the thermal energy generator (10) entering the heat exchanger (12, 13) to which it is connected.

13. The method of claims 10 to 12 the processing unit further comprising means (32) adapted to communicate to the second TRV (22) comprising an aperture (5) to adjust a flow of heat transfer fluid from the thermal energy generator (10) entering a second heat exchanger (12) in a second room (102) based on the second TRV-defined temperature setpoint, the processing unit being configured to send to the second TRV (22) a second aperture setting defined as a function of the first TRV-defined temperature setpoint, the second TRV-defined temperature setpoint and the temperature configuration model, the method further comprising
- defining by the first aperture setting and the second aperture setting, an equilibrium position corresponding to the apertures of the TRVs enabling to reach the first and second TRV-defined temperature setpoints.

14. The method of claims 9 to 13, the method further comprising
- configuring the processing unit to calculate parameters of the temperature configuration model,
- determining the parameters by a learning module based on a history of actual environmental parameters captured from the plurality of TRVs or the thermostat.

15. The method of claims 12-14, the method further comprising
- configuring the TRV to enables the flow of heat transfer fluid from the thermal energy generator (10) entering the heat exchanger (12, 13) to which it is connected after a duration of time or based on the temperature measurement of at least a second TRV- or a remote temperature sensor

## Patentansprüche

1. Satz, umfassend:
- ein erstes thermostatisches Heizkörperventil (TRV, 21) und ein zweites thermostatisches Heizkörperventil (TRV, 22), jedes umfassend eine Öffnung (5) zum Anpassen eines Stroms von Wärmetransferfluid von einem Wärmeenergiegenerator (10), der in einen Wärmetauscher (11) eintritt, und
- eine Verarbeitungseinheit, verbunden mit einem Thermostat (60), der den Wärmeenergiegenerator (10) steuert,
jedes TRV (21) umfassend:
- ein Mittel (31), angepasst zum Kommunizieren mit der Verarbeitungseinheit;
- eine Eingabeschnittstelle, konfiguriert um eines oder mehrere der Folgenden auszuführen:
∘ einem Benutzer gestatten eine Eingabe vorzunehmen oder
∘ einen TRV-definierten Temperatursollwert zu erfassen;
**dadurch gekennzeichnet, dass** das erste TRV (21) ferner konfiguriert ist zum Empfangen, von der Verarbeitungseinheit, einer ersten Öffnungseinstellung, wobei die erste Öffnungseinstellung definiert ist als eine Funktion eines Temperaturkonfigurationsmodells, verfügbar an der Verarbeitungseinheit, und des TRV-definierten Temperatursollwerts des ersten TRV (21), das zweite TRV (22) ferner konfiguriert ist zum Empfangen, von der Verarbeitungseinheit, einer zweiten Öffnungseinstellung, wobei die zweite Öffnungseinstellung definiert ist als eine Funktion eines Temperaturkonfigurationsmodells, verfügbar an der Verarbeitungseinheit, und des TRV-definierten Temperatursollwerts des zweiten TRV (22), wobei das Temperaturkonfigurationsmodell durch aktualisierbare Modellparameter definiert wird, und
dadurch, dass die erste Öffnungseinstellung und die zweite Öffnungseinstellung eine Gleichgewichtsposition für jedes TRV bestimmen, die es ermöglicht, den TRV-definierten Temperatursollwert für jedes TRV zu erreichen.

2. Satz nach Anspruch 1, wobei die erste Öffnungseinstellung ferner definiert ist als eine Funktion der ersten TRV-definierten Temperatur und/oder mindestens eines zweiten TRV-definierten Temperatursollwerts mindestens eines zweiten TRV oder eines entfernten Temperatursensors.

3. Satz nach Anspruch 1 oder 2, wobei das TRV konfiguriert ist zum Speichern eines Zeitplans (171, 172, 173, 174, 175, 176) von TRV-definierten Temperatursollwerten (Tr1, Tr2, Tr3, Tr4, Tr5).

4. Satz nach Anspruch 1 bis 3, wobei das TRV ferner einen Temperatursensor (51, 52, 53, 54, 55, 56) umfasst, konfiguriert zum Detektieren eines Temperaturabfalls, und das TRV konfiguriert ist zum Stoppen des Stroms von Wärmetransferfluid von dem Wärmeenergiegenerator (10), der in den Wärmetauscher (12, 13) eintritt, mit dem er verbunden ist.

5. Satz nach Anspruch 2 bis 4, die Verarbeitungseinheit ferner umfassend ein Mittel (32), angepasst zum Kommunizieren mit dem zweiten TRV (22), umfassend eine Öffnung (5) zum Anpassen eines Stroms von Wärmetransferfluid von dem Wärmeenergiegenerator (10), der in einen zweiten Wärmetauscher (12) in einem zweiten Raum (102) eintritt, basierend auf dem zweiten TRV-definierten Temperatursollwert,
wobei die Verarbeitungseinheit konfiguriert ist zum Senden, an das zweite TRV (22), einer zweiten Öffnungseinstellung, definiert als eine Funktion des ersten TRV-definierten Temperatursollwerts, des zweiten TRV-definierten Temperatursollwerts und des Temperaturkonfigurationsmodells, wobei die erste Öffnungseinstellung und die zweite Öffnungseinstellung eine Gleichgewichtsposition korrespondierend mit den Öffnungen der TRVs definieren, die es ermöglicht, den ersten und den zweiten TRV-definierten Temperatursollwert zu erreichen.

6. Satz nach Anspruch 1 bis 5, ferner umfassend:
- einen Server, umfassend ein Mittel zum Kommunizieren mit dem TRV und/oder der Verarbeitungseinheit;
- einen Speicher, in dem Folgendes gespeichert ist:
- eine Datenbank von Werten von zeitlichen Abfolgen von Umgebungsparametern, erfasst aus der Vielzahl von TRVs und dem Thermostat;
wobei die Verarbeitungseinheit konfiguriert ist zum Berechnen von Parametern des Temperaturkonfigurationsmodells, wobei die Parameter durch ein Lernmodul bestimmt werden, das mindestens einige der Werte von in der Datenbank gespeicherten zeitlichen Verläufen von Umgebungsparametern als Eingabe empfängt, und die an mindestens eines der TRVs durch das zum Kommunizieren angepasste Mittel verteilt werden.

7. Satz nach Anspruch 1 bis 5, wobei die Verarbeitungseinheit konfiguriert ist zum Berechnen von Parametern des Temperaturkonfigurationsmodells, wobei die Parameter durch ein Lernmodul basierend auf einer Historie von tatsächlichen Umgebungsparametern, erfasst von der Vielzahl von TRVs oder dem Thermostat, bestimmt werden.

8. Satz nach Anspruch 4 bis 7, wobei das TRV ferner konfiguriert ist zum erneuten Starten des Stroms von Wärmetransferfluid von dem Wärmeenergiegenerator (10), der in den Wärmetauscher (12, 13) eintritt, mit dem er verbunden ist, nach einer Zeitdauer oder basierend auf der Temperaturmessung von mindestens einem zweiten TRV- oder einem entfernten Temperatursensor.

9. Verfahren für Temperaturausgleichung unter Verwendung eines ersten thermostatischen Heizkörperventils (TRV, 21) und eines zweiten thermostatischen Heizkörperventils (TRV, 22) in einem ersten Raum, jedes umfassend eine Öffnung (5) zum Anpassen eines Stroms von Wärmetransferfluid von einem Wärmeenergiegenerator (10), der in einen Wärmetauscher (11) in dem ersten Raum (101) eintritt, jedes TRV (21, 22) umfassend:
- ein Mittel (31), angepasst zum Kommunizieren mit einer Verarbeitungseinheit, verbunden mit einem Thermostat (60), der den Wärmeenergiegenerator (10) steuert;
- eine Eingabeschnittstelle, konfiguriert um eines oder mehrere der Folgenden auszuführen: einem Benutzer gestatten eine Eingabe vorzunehmen oder einen definierten Temperatursollwert zu erfassen;
**dadurch gekennzeichnet, dass** das Verfahren den Schritt umfasst, Folgendes von der Verarbeitungseinheit zu empfangen:
- eine erste Öffnungseinstellung für das erste TRV (21), wobei die erste Öffnungseinstellung definiert ist als eine Funktion des Temperaturkonfigurationsmodells und des TRV-definierten Temperatursollwerts des ersten TRV (21),
- eine zweite Öffnungseinstellung für das zweite TRV (22), wobei die zweite Öffnungseinstellung definiert ist als eine Funktion des Temperaturkonfigurationsmodells und des TRV-definierten Temperatursollwerts des zweiten TRV (22), wobei das Temperaturkonfigurationsmodell durch aktualisierbare Modellparameter definiert wird,
der Schritt des Bestimmens, aus der ersten Öffnungseinstellung und der zweiten Öffnungseinstellung, einer Gleichgewichtsposition für jedes TRV, die es ermöglicht, den TRV-definierten Temperatursollwert für jedes TRV zu erreichen.

10. Verfahren nach Anspruch 9, wobei die erste Öffnungseinstellung ferner definiert ist als eine Funktion der ersten TRV-definierten Temperatur und/oder mindestens eines zweiten TRV-definierten Temperatursollwerts von mindestens einem zweiten TRV oder einem entfernten Temperatursensor.

11. Verfahren nach Anspruch 9 oder 10, das Verfahren ferner umfassend:
- Konfigurieren des TRV zum Speichern eines Zeitplans (171, 172, 173, 174, 175, 176) von TRV-definierten Temperatursollwerten (Tr1, Tr2, Tr3, Tr4, Tr5).

12. Verfahren nach Anspruch 9 bis 11, wobei das TRV ferner einen Temperatursensor (51, 52, 53, 54, 55, 56) umfasst, das Verfahren ferner umfassend:
- Konfigurieren des TRV zum Detektieren eines Temperaturabfalls und Konfigurieren des TRV zum Stoppen des Stroms von Wärmetransferfluid von dem Wärmeenergiegenerator (10), der in den Wärmetauscher (12, 13) eintritt, mit dem er verbunden ist.

13. Verfahren nach Anspruch 10 bis 12, die Verarbeitungseinheit ferner umfassend ein Mittel (32), angepasst zum Kommunizieren mit dem zweiten TRV (22), umfassend eine Öffnung (5) zum Anpassen eines Stroms von Wärmetransferfluid von dem Wärmeenergiegenerator (10), der in einen zweiten Wärmetauscher (12) in einem zweiten Raum (102) eintritt, basierend auf dem zweiten TRV-definierten Temperatursollwert,
wobei die Verarbeitungseinheit konfiguriert ist zum Senden, an das zweite TRV (22), einer zweiten Öffnungseinstellung, definiert als eine Funktion des ersten TRV-definierten Temperatursollwerts, des zweiten TRV-definierten Temperatursollwerts und des Temperaturkonfigurationsmodells, das Verfahren ferner umfassend:
- Definieren, durch die erste Öffnungseinstellung und die zweite Öffnungseinstellung, einer Gleichgewichtsposition korrespondierend mit den Öffnungen der TRVs, die es ermöglicht, den ersten und den zweiten TRV-definierten Temperatursollwert zu erreichen.

14. Verfahren nach Anspruch 9 bis 13, das Verfahren ferner umfassend:
- Konfigurieren der Verarbeitungseinheit zum Berechnen von Parametern des Temperaturkonfigurationsmodells,
- Bestimmen der Parameter durch ein Lernmodul basierend auf einer Historie von tatsächlichen Umgebungsparametern, erfasst von der Vielzahl von TRVs oder dem Thermostat.

15. Verfahren nach Anspruch 12 bis 14, das Verfahren ferner umfassend:
- Konfigurieren des TRV zum Ermöglichen des Stroms von Wärmetransferfluid von dem Wärmeenergiegenerator (10), der in den Wärmetauscher (12, 13) eintritt, mit dem er verbunden ist, nach einer Zeitdauer oder basierend auf der Temperaturmessung von mindestens einem zweiten TRV- oder einem entfernten Temperatursensor.

## Revendications

1. Ensemble comprenant :
- une première vanne de radiateur thermostatique (TRV, 21) et une seconde vanne de radiateur thermostatique (TRV, 22), comprenant chacune une ouverture (5) pour ajuster un écoulement de fluide caloporteur, provenant d'un générateur d'énergie thermique (10), entrant dans un échangeur de chaleur (11) ; et
- une unité de traitement connectée à un thermostat (60) commandant le générateur d'énergie thermique (10) ;
chaque TRV (21) comprenant :
- un moyen (31) adapté à communiquer avec l'unité de traitement ;
- une interface d'entrée configurée pour l'une ou plusieurs des actions suivantes :
∘ permettre à un utilisateur de saisir ou
∘ d'acquérir un point de consigne de température défini par la TRV ;
**caractérisé en ce que** la première TRV (21) est en outre configurée pour recevoir, en provenance de l'unité de traitement, un premier réglage d'ouverture, le premier réglage d'ouverture étant défini comme une fonction d'un modèle de configuration de température disponible au niveau de l'unité de traitement, et du point de consigne de température défini par TRV de la première TRV (21), la seconde TRV (22) est en outre configurée pour recevoir, en provenance de l'unité de traitement, un second réglage d'ouverture, le second réglage d'ouverture étant défini comme une fonction d'un modèle de configuration de température disponible au niveau de l'unité de traitement, et du point de consigne de température défini par TRV de la seconde TRV (22), le modèle de configuration de température étant défini par des paramètres de modèle pouvant être mis à jour ; et
**en ce que** le premier réglage d'ouverture et le second réglage d'ouverture déterminent une position d'équilibre pour chaque TRV permettant d'atteindre le point de consigne de température défini par la TRV pour chaque TRV.

2. Ensemble selon la revendication 1, dans lequel le premier réglage d'ouverture est en outre défini comme une fonction de la première température définie par TRV, et/ou d'au moins un second point de consigne de température défini par TRV d'au moins une seconde TRV ou d'un capteur de température distant.

3. Ensemble selon la revendication 1 ou 2, dans lequel la TRV est configurée pour stocker une programmation temporelle (171, 172, 173, 174, 175, 176) de points de consigne de température définis par TRV (Tr1, Tr2, Tr3, Tr4, Tr5).

4. Ensemble selon l'une quelconque des revendications 1 à 3, dans lequel la TRV comprend en outre un capteur de température (51, 52, 53, 54, 55, 56) configuré pour détecter une chute de température, et la TRV est configurée pour interrompre l'écoulement de fluide caloporteur en provenance du générateur d'énergie thermique (10), entrant dans l'échangeur de chaleur (12, 13) auquel elle est connectée.

5. Ensemble selon l'une quelconque des revendications 2 à 4, dans lequel l'unité de traitement comprend en outre un moyen (32) adapté à communiquer avec la seconde TRV (22), comprenant une ouverture (5) pour ajuster un écoulement de fluide caloporteur en provenance du générateur d'énergie thermique (10), entrant dans un second échangeur de chaleur (12), dans une seconde pièce (102), sur la base du second point de consigne de température défini par TRV,
l'unité de traitement étant configurée pour envoyer, à la seconde TRV (22), un second réglage d'ouverture défini comme une fonction du premier point de consigne de température défini par TRV, du second point de consigne de température défini par TRV et du modèle de configuration de température, dans lequel le premier réglage d'ouverture et le second réglage d'ouverture définissent une position d'équilibre correspondant aux ouvertures des TRV permettant d'atteindre les premier et second points de consigne de température définis par TRV.

6. Ensemble selon l'une quelconque des revendications 1 à 5, comprenant en outre :
- un serveur comprenant un moyen pour communiquer avec la TRV et/ou l'unité de traitement ;
- une mémoire sur laquelle est stockée ;
- une base de données de valeurs de séquences temporelles de paramètres environnementaux capturés à partir de la pluralité de TRV et du thermostat ;
l'unité de traitement étant configurée pour calculer des paramètres du modèle de configuration de température, dans lequel les paramètres sont déterminés par un module d'apprentissage recevant, en tant qu'entrée, au moins certaines des valeurs de séquences temporelles de paramètres environnementaux, stockées dans la base de données, et sont distribués à au moins l'une des TRV par le biais du moyen adapté à communiquer.

7. Ensemble selon l'une quelconque des revendications 1 à 5, dans lequel l'unité de traitement est configurée pour calculer des paramètres du modèle de configuration de température, dans lequel les paramètres sont déterminés par un module d'apprentissage, sur la base d'un historique de paramètres environnementaux réels capturés à partir de la pluralité de TRV ou du thermostat.

8. Ensemble selon l'une quelconque des revendications 4 à 7, dans lequel la TRV est en outre configurée pour redémarrer l'écoulement de fluide caloporteur, en provenance du générateur d'énergie thermique (10), entrant dans l'échangeur de chaleur (12, 13), auquel elle est connectée, après une durée donnée, ou sur la base de la mesure de température d'au moins une seconde TRV ou d'un capteur de température distant.

9. Procédé de régulation de température utilisant une première vanne de radiateur thermostatique (TRV, 21) et une seconde vanne de radiateur thermostatique (TRV, 22) dans une première pièce (101), comprenant chacune une ouverture (5) pour ajuster un écoulement de fluide caloporteur, provenant d'un générateur d'énergie thermique (10), entrant dans un échangeur de chaleur (11) dans la première pièce (101), chaque TRV (21, 22) comprenant :
- un moyen (31) adapté à communiquer avec une unité de traitement connectée à un thermostat (60) commandant le générateur d'énergie thermique (10) ;
- une interface d'entrée configurée pour l'une ou plusieurs des actions suivantes : permettre à un utilisateur de saisir ou d'acquérir un point de consigne de température défini ;
**caractérisé en ce que** le procédé comprend l'étape consistant à recevoir, en provenance de l'unité de traitement :
- un premier réglage d'ouverture pour la première TRV (21), le premier réglage d'ouverture étant défini comme une fonction du modèle de configuration de température et du point de consigne de température défini par TRV de la première TRV (21) ;
- un second réglage d'ouverture pour la seconde TRV (22), le second réglage d'ouverture étant défini comme une fonction du modèle de configuration de température et du point de consigne de température défini par TRV de la seconde TRV (22), le modèle de configuration de température étant défini par des paramètres de modèle pouvant être mis à jour ;
l'étape consistant à déterminer, à partir du premier réglage d'ouverture et du second réglage d'ouverture, une position d'équilibre pour chaque TRV, permettant d'atteindre le point de consigne de température défini par TRV pour chaque TRV.

10. Procédé selon la revendication 9, dans lequel le premier réglage d'ouverture est en outre défini comme une fonction de la première température définie par TRV, et/ou d'au moins un second point de consigne de température défini par TRV d'au moins une seconde TRV, ou d'un capteur de température distant.

11. Procédé selon la revendication 9 ou 10, dans lequel le procédé comprend en outre l'étape ci-dessous consistant à :
- configurer la TRV pour stocker une programmation temporelle (171, 172, 173, 174, 175, 176) de points de consigne de température définis par TRV (Tr1, Tr2, Tr3, Tr4, Tr5).

12. Procédé selon l'une quelconque des revendications 9 à 11, dans lequel la TRV comprend en outre un capteur de température (51, 52, 53, 54, 55, 56), le procédé comprenant en outre l'étape ci-dessous consistant à :
- configurer la TRV pour détecter une chute de température, et configurer la TRV pour interrompre l'écoulement de fluide caloporteur, provenant du générateur d'énergie thermique (10), entrant dans l'échangeur de chaleur (12, 13) auquel elle est connectée.

13. Procédé selon l'une quelconque des revendications 10 à 12, dans lequel l'unité de traitement comprend en outre un moyen (32) adapté à communiquer avec la seconde TRV (22), comprenant une ouverture (5) pour ajuster un écoulement de fluide caloporteur, provenant du générateur d'énergie thermique (10), entrant dans un second échangeur de chaleur (12), dans une seconde pièce (102), sur la base du second point de consigne de température défini par TRV,
l'unité de traitement étant configurée pour envoyer, à la seconde TRV (22), un second réglage d'ouverture défini comme une fonction du premier point de consigne de température défini par TRV, du second point de consigne de température défini par TRV, et du modèle de configuration de température, le procédé comprenant en outre l'étape ci-dessous consistant à :
- définir, par le biais du premier réglage d'ouverture et du second réglage d'ouverture, une position d'équilibre correspondant aux ouvertures des TRV, permettant d'atteindre les premier et second points de consigne de température définis par TRV.

14. Procédé selon l'une quelconque des revendications 9 à 13, le procédé comprenant en outre les étapes ci-dessous consistant à :
- configurer l'unité de traitement pour calculer des paramètres du modèle de configuration de température ;
- déterminer les paramètres, par le biais d'un module d'apprentissage, sur la base d'un historique de paramètres environnementaux réels capturés à partir de la pluralité de TRV ou du thermostat.

15. Procédé selon l'une quelconque des revendications 12 à 14, dans lequel le procédé comprend en outre l'étape ci-dessous consistant à :
- configurer la TRV pour permettre l'écoulement de fluide caloporteur, en provenance du générateur d'énergie thermique (10), entrant dans l'échangeur de chaleur (12, 13) auquel elle est connectée, après une durée donnée, ou sur la base de la mesure de température d'au moins une seconde TRV ou d'un capteur de température distant.
